# DEMANDE DE BREVET EUROPEEN

(11) **EP 1 570 722 A1**
(43) Date de publication de la demande: **07.09.2005**
(21) Numéro de dépôt: 05290437.2
(22) Date de dépôt: 25.02.2005
(51) Int. Cl.: A01D 34/86

(54) **Dispositif de suspension d'un outil de coupe ou de broyage à un élément porteur comportant des moyens permettant de commander son mouvement d'abaissement et/ou soulèvement**

(30) Priorité: 01.03.2004 FR 0402075
(71) Demandeur: Noremat, 54710 Ludres (FR)
(72) Inventeur: Bayle, Christian, F-69250 Neuville sur Saone (FR); Labat, Jean-Pierre, F-54840 Gondreville (FR)
(74) Mandataire: Kaspar, Jean-Georges

(57) **Abrégé**

Dispositif de suspension d'un outil de coupe ou broyage (1) à un élément porteur (2) par des moyens lui permettant de pivoter autour d'un axe (XX) parallèle à la direction d'avancement et de s'abaisser ou se soulever en fonction des irrégularités du sol tout en étant tiré et non poussé, caractérisé par le fait qu'il est relié à son élément porteur (2) par des moyens (5, 6) permettant de commander son mouvement d'abaissement et/ou soulèvement.

## Description

La présente demande est relative à des perfectionnements aux dispositifs de suspension d'un broyeur à axe horizontal, du type dit "épareuse".

Dans le brevet français n° 2 762 962 du 7 mai 1997 au nom du même demandeur, on a décrit des moyens par lesquels un broyeur latéral, à axe horizontal, est attelé à l'extrémité d'un bras porteur latéral de façon à être tiré et non pas poussé.

Dans ce même brevet, on a décrit la disposition de moyens permettant audit broyeur de pivoter d'une part autour d'un axe horizontal parallèle à la direction d'avancement du véhicule et d'autre part autour d'un deuxième axe horizontal, perpendiculaire au précédent afin de pouvoir se soulever et/ou s'abaisser pour épouser les irrégularités du sol.

Dans le brevet français n° 2 774 551 du 9 février 1998 au nom du même demandeur, on a décrit un perfectionnement au dispositif permettant de repositionner en hauteur l'outil de coupe.

La présente invention a pour objet des perfectionnements à ces deux dispositifs.

Selon un premier perfectionnement, le broyeur à axe horizontal est suspendu à son attelage par l'intermédiaire d'un parallélogramme déformable qui lui permet de se lever et/ou de s'abaisser en demeurant parallèle à lui-même.

De plus, un vérin est combiné audit parallélogramme déformable de façon à pouvoir bloquer ou commander la déformation.

De préférence, des moyens élastiques sont adjoints audit parallélogramme, ces moyens pouvant être combinés à ce dernier.

Selon un deuxième perfectionnement, le dispositif d'attelage est constitué par : un étrier porteur articulé à l'une de ses extrémités au bras porteur du véhicule selon un axe parallèle à la direction d'avancement de l'outil et portant à son autre extrémité le parallélogramme déformable.

De préférence, ledit parallélogramme déformable est relié à un vérin hydraulique.

A titre d'exemple non limitatif et pour faciliter la compréhension de l'invention, on a représenté aux dessins annexés :
- Figure 1, une vue en perspective illustrant un exemple de réalisation de l'invention.
- Figure 2, une vue de détail du vérin du dispositif de la figure 1.

En se reportant à ces figures, on voit que l'outil de broyage 1, qui est de préférence un broyeur à axe horizontal du type dit "épareuse" au moyen duquel on fauche les végétaux qui poussent sur les bas-côtés des routes ou dans les fossés, est porté à l'extrémité du bras porteur 2 d'un véhicule, non représenté.

Ce bras porteur 2 peut se soulever et s'abaisser, comme cela est illustré par les flèches f₁.

A l'extrémité du bras porteur 2, est articulé un élément porteur 3 ayant la forme d'un étrier.

Cet étrier 3 est articulé à l'extrémité du bras 2 par des moyens qui lui permettent de pivoter autour de l'axe XX, qui est parallèle à la direction d'avancement du véhicule portant l'outil 1.

Le vérin 4 porté par le bras 2, fait pivoter l'étrier 3 autour de l'axe XX, comme cela est indiqué par les flèches f₂.

Cela permet donc de régler la position de l'outil de broyage 1 par rapport au plan horizontal, par exemple pour nettoyer les rebords d'un fossé, ou encore le bord d'une haie en mettant l'outil 1 en position verticale.

A son autre extrémité, l'étrier 3 porte deux bras parallèles 5 qui sont articulés autour de deux axes parallèles YY, lesquels sont perpendiculaires à l'axe XX.

Les deux bras 5 articulés autour des axes YY forment un parallélogramme déformable, que l'on désignera ci-après par la référence 5.

Ce parallélogramme déformable 5 peut se débattre selon les flèches f₃ dans un plan qui est perpendiculaire aux axes YY (et donc parallèle à l'axe XX).

Cela permet donc à l'outil 1 de s'élever ou s'abaisser en restant parallèle à lui-même.

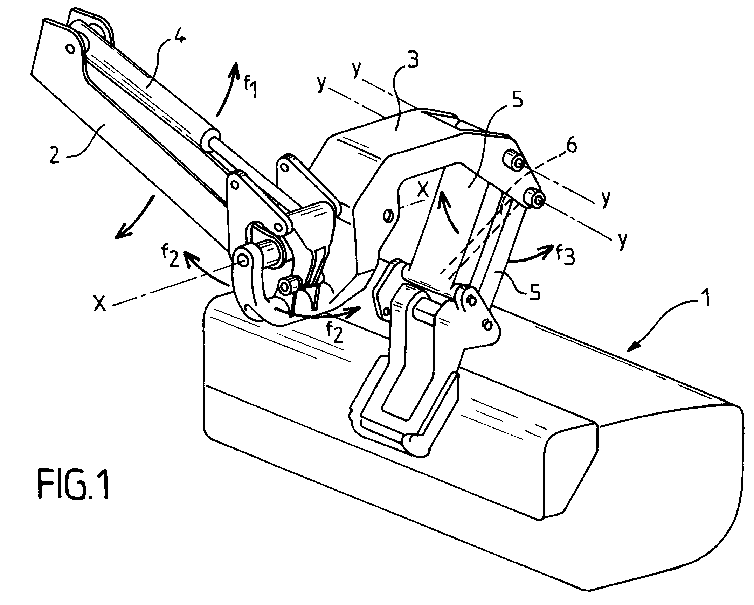

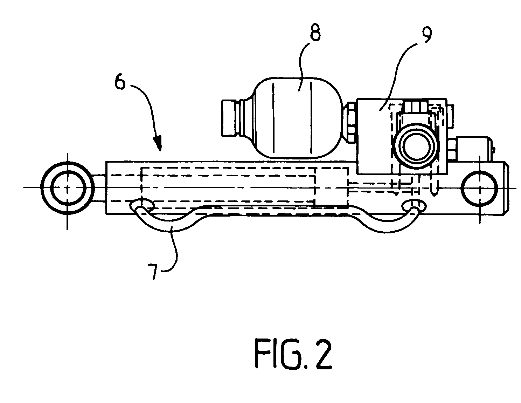

Un vérin hydraulique 6, représenté de façon schématique à la figure 1 (et de façon plus précise à la figure 2) est interposé entre les axes opposés du parallélogramme 5 pour en commander la déformation.

Dans l'exemple représenté à la figure 2, ce vérin est un vérin libre ou encore "passif", c'est-à-dire non commandé par une source de liquide hydraulique sous pression.

Les deux chambres du vérin sont remplies d'huile et communiquent directement entre elles par une canalisation 7.

Un accumulateur 8 est relié à l'une des deux chambres de façon à compenser les variations de volume du liquide hydraulique lorsque le vérin se débat librement (du fait que les deux chambres du vérin n'ont pas la même section apparente).

Une électrovanne 9 est interconnectée au circuit accumulateur/chambres, cette électrovanne ayant pour fonction d'empêcher, quand elle est activée, toute circulation d'huile d'une chambre à l'autre et donc de bloquer le vérin 6.

Lorsque le vérin 6 est bloqué, le parallélogramme est également bloqué et ne peut plus se débattre.

Le fonctionnement du dispositif ainsi décrit est le suivant.

En fonctionnement normal, le parallélogramme 5 se débat librement selon les flèches f₃ en fonction des irrégularités du sol.

En cas d'obstacle, par exemple un panneau de signalisation, il faut amener l'outil de broyage en position haute pour franchir l'obstacle.

Cela se fait en actionnant le bras 2.

Mais avec les dispositifs connus, cela aurait pour effet de déplier la suspension de l'outil ou, en d'autres termes que celui-ci, s'abaisserait au fur et à mesure de la levée du bras 2 jusqu'à arriver en bout de course. Il en résulte qu'il faut soit que le conducteur du véhicule arrête son véhicule pendant le temps nécessaire pour que l'outil soit soulevé, soit qu'il anticipe l'obstacle en commençant à lever plus tôt le bras 2, ce qui a pour effet une coupe irrégulière, de plus en plus haute, avant le panneau.

Selon la présente invention, en actionnant l'électrovanne 9 du vérin 6, on bloque instantanément tout débattement de l'outil 1, qui peut être, alors, immédiatement soulevé.

L'exemple décrit en relation avec la figure 2 est le mode de réalisation le plus simple dont le plus économique.

Cependant, il est possible de rendre le vérin 6 "actif" en le reliant à une source de liquide hydraulique sous pression ce qui permet alors de commander le débattement de l'outil selon les flèches f₃.

Il faut d'autre part noter que l'on peut, grâce à l'accumulateur 8, donner au vérin 6 la fonction d'une suspension élastique compensant partiellement le poids de l'outil 1.

Il y a lieu de noter que l'invention n'est pas limitée au cas où le vérin est un vérin hydraulique, mais peut s'appliquer à tous types de vérins, pneumatiques ou autres.

Il y a également lieu de noter que l'invention n'est pas limitée à un outil de coupe tel qu'une épareuse, mais peut être appliquée à tout outil de coupe.

## Revendications

1. Dispositif de suspension d'un outil de coupe ou broyage (1) à un élément porteur (2) par des moyens lui permettant de pivoter autour d'un axe (XX) parallèle à la direction d'avancement et de s'abaisser ou se soulever en fonction des irrégularités du sol tout en étant tiré et non poussé, **caractérisé par le fait qu'**il est relié à son élément porteur (2) par un parallélogramme déformable (5) commandé par un vérin (6) permettant de commander son mouvement d'abaissement et/ou soulèvement.

2. Dispositif selon la revendication 1, dans lequel l'outil (1) est suspendu par un parallélogramme déformable (5) auquel est combiné un vérin hydraulique (6).

3. Dispositif selon la revendication 2, dans lequel le vérin (6) est passif, ses deux chambres étant en communication permanente au moyen d'une canalisation (7) reliant directement ses deux chambres ; un accumulateur (8) permettant de compenser les différences de volumes desdites chambres ; et une électrovanne (9) permettant d'interrompre la circulation du liquide hydraulique et donc de bloquer le vérin (6) ce qui interdit toute déformation du parallélogramme (5).

4. Dispositif selon la revendication 2, dans lequel le vérin (6) est un vérin actif relié à une source de liquide hydraulique sous pression de façon à pouvoir commander les déformations du parallélogramme déformable (5).

5. Dispositif selon l'une des revendications 3 et 4, dans lequel l'accumulateur (8) assure la fonction d'une suspension élastique.

6. Dispositif selon l'une quelconque des revendications précédentes, **caractérisé par le fait qu'**il comporte : un élément porteur (2) auquel est articulé à l'une de ses extrémités, selon un axe (XX) parallèle à la direction d'avancement, un étrier (3) muni à son autre extrémité d'un parallélogramme déformable (5) auquel est suspendu l'outil (1).
